# DEMANDE DE BREVET EUROPEEN

(11) **EP 1 726 570 A1**
(43) Date de publication de la demande: **29.11.2006**
(21) Numéro de dépôt: 06290874.4
(22) Date de dépôt: 29.05.2006
(51) Int. Cl.: C02F 3/04, C02F 1/04, C05F 17/00, C02F 11/16, C05F 17/02, C05F 9/04, C05F 11/06

(54) **Récipient, installation et procédé pour le traitement d'effluents liquides par evaporation et degradation de la charge organique**

(30) Priorité: 25.05.2005 FR 0551373
(71) Demandeur: Drevet, Michel, 69003 Lyon (FR)
(72) Inventeur: Drevet, Michel, 69003 Lyon (FR)
(74) Mandataire: Boulinguiez, Didier

(57) **Abrégé**

L'invention concerne le traitement d'effluents liquides aqueux, chargés en matière solide et/ou en matière organique. Plus particulièrement, elle concerne un procédé de traitement sur un substrat d'origine végétale (du compost "vert"), par évaporation et/ou par dégradation aérobie de la charge organique des effluents liquides. L'invention concerne également une installation et un récipient spécialement conçus pour la mise en oeuvre de ce procédé.

## Description

La présente invention concerne le traitement d'effluents liquides, chargés en matière solide et/ou en matière organique. Plus particulièrement, elle concerne un procédé de traitement d'effluents liquides aqueux sur un substrat d'origine végétale, par évaporation et/ou par dégradation aérobie de la charge organique des effluents liquides. L'invention concerne également une installation et un récipient spécialement conçus pour la mise en oeuvre de ce procédé. En outre, l'invention concerne un substrat végétal enrichi ainsi qu'un amendement agricole et/ou horticole.

Les exploitations agricoles et les industries agroalimentaires doivent respecter la législation en matière de rejets liquides. Les dispositions applicables varient en fonction du volume d'effluent et de la quantité de pollution rejetée, ainsi qu'en fonction des caractéristiques du milieu récepteur.

Les exploitations agricoles de petite et de moyenne tailles ont vocation à engager des démarches de traitement de leurs effluents liquides, lesquels ne peuvent être rejetés directement dans l'environnement. Cela est d'ailleurs vrai aussi bien pour les exploitations agricoles que pour les industries agro-alimentaires.

Si le traitement des effluents liquides chargés en matières organiques est correctement maîtrisé du point de vue technique et économique dès lors que les volumes d'effluents à traiter sont importants, il n'en va pas de même pour de plus faibles volumes d'effluents fortement chargés en matière organique et dont la production est très variable tant du point de vue du volume que de la charge en matière organique, au cours du temps.

Ainsi, le cas des exploitations viticoles et/ou vinicoles (dites viti-vinicoles) est une bonne illustration de cette problématique. La production de vin est une activité saisonnière qui nécessite une consommation importante d'eau sur une période de quelques mois qui débute avec les vendanges. Les effluents vinicoles ne peuvent être rejetés directement dans le milieu naturel sans traitement car ils sont à la fois trop chargés en matière organique et trop peu fertiles pour une valorisation agronomique directe.

Le volume d'effluents produits est en général sensiblement égal au volume de vin. Les effluents vinicoles comprennent essentiellement des eaux de lavage en contact direct avec le vin (matériel, cuves) ou non (sol, aires de travail) et d'éventuels rejets de vins et de lies. Le problème du traitement de ces effluents est particulièrement prégnant dans les chais produisant moins de 3 000 hectolitres de vin par an, et plus particulièrement les chais non soumis à redevance.

En France, les chais produisant une pollution supérieure à 200 équivalents habitants sont tenus d'acquitter une redevance pour le traitement de leurs effluents. Ces chais sont majoritairement équipés d'un système de traitement de leurs effluents. *A contrario*, les chais non soumis à redevances sont rarement équipés. Cependant ; la loi les oblige à s'engager dans la mise en oeuvre d'un système de traitement dès 2006.

A titre d'illustration, nous pouvons rappeler qu'une pollution de 200 équivalents habitants correspond grossièrement à la vinification de 1800 hectolitres de vins dans la région du Beaujolais et à 2200 hectolitres de vins dans le Bordelais.

Ce problème de traitement des effluents se pose également dans d'autres types d'exploitations agricoles ou d'industries agro-alimentaires, qui utilisent comme matière première des matières d'origine végétale (brasserie, huilerie, distillerie, raffinerie...) ou animale (laiterie, fabrication de produits laitiers, élevage...). Ainsi, sont essentiellement visées les exploitations agricoles et/ou industries agroalimentaires qui rejettent en moyenne au plus 350m³ d'effluents organiques par an.

La demande de brevet FR-A-2 720 389 (PEULTIER) concerne un procédé et une installation de déshydratation par compostage, d'effluents liquides de type boues liquides recueillies au cours du processus d'épuration des eaux usées. L'installation comprend une chambre de compostage dans laquelle est aménagé un réseau de canalisations percées d'une pluralité d'orifices. La chambre est remplie de substrat compostable constitué de broyats de bois. Les effluents liquides sont amenés goutte à goutte à travers les canalisations. Une circulation forcée d'air à l'intérieur de la chambre de compostage est prévue, ainsi qu'un échangeur de chaleur, afin de réchauffer l'air mis en circulation forcée à travers le substrat en utilisant la chaleur dégagée lors du compostage.

Ce dispositif présente plusieurs inconvénients. Tout d'abord, il est d'un entretien malaisé, du fait de la présence de canalisations à l'intérieur de la chambre de compostage, noyées dans le substrat. Les orifices des canalisations risquent de se trouver colmatés. Le chargement et le déchargement du substrat sont des opérations difficiles. Par ailleurs, il est nécessaire de renouveler le substrat compostable tous les 3 à 4 mois, ce qui peut représenter un important surcroît de travail pour l'exploitant.

Par ailleurs, l'installation implique une forte dépense énergétique pour piloter et contrôler le fonctionnement de l'échangeur de chaleur et de la ventilation forcée. Etant donné que le compostage a lieu en milieu fermé, il existe un risque de fermentation anaérobie particulièrement préjudiciable, notamment en terme d'odeurs. Enfin, cette installation nécessite une emprise au sol importante, incompatible avec une utilisation dans une exploitation agricole ou une industrie agro-alimentaire de petite taille.

La demande de brevet français FR-A-2 751 922 (VIGNOLLES) concerne un procédé de traitement des résidus viticoles pour produire un compost à base de sarments de vigne. Le traitement a pour finalité le recyclage et la récupération des déchets visqueux ou solides issus de la viticulture. Il consiste à récupérer et stocker les résidus viticoles, filtrer les effluents, concentrer les filtrats, sécher les sarments, les broyer et les mélanger aux déchets visqueux des filtrats, asperger les produits broyés par les filtrats, acheminer le mélange vers un dispositif de préparation du compost, et récupérer le compost utilisable comme amendement ou engrais.

L'installation décrite dans ce document implique une emprise au sol importante, qui n'est pas acceptable dans une exploitation agricole de petite dimension. Le procédé comprend une étape de concentration des effluents et une étape de compostage dans une enceinte close, avec un brassage du mélange à composter.

La demande de brevet européen EP-A-0 791 568 (JAPAN GORE-TEX) concerne une méthode et un dispositif de traitement de déchets organiques. Ce dispositif comporte un contenant interne pour recevoir des déchets organiques domestiques. Une partie de la paroi du contenant interne est constituée d'un matériau hydrofuge et perméable à la vapeur d'eau, par exemple une résine polyoléfine. Le dispositif comporte en outre un contenant externe dans lequel est placé le contenant interne. Le contenant externe est muni d'une entrée d'air et d'une sortie d'air, pour faire circuler de l'air à l'aide d'un ventilateur, dans l'espace laissé par le contenant interne à l'intérieur du contenant externe. Cette circulation forcée d'air permet d'évacuer l'air humide et de le remplacer par de l'air plus sec. Le contenant interne est équipé d'un agitateur.

Ce dispositif n'est pas adapté aux effluents liquides chargés en matière organique, mais aux déchets organiques solides ou semi-solides domestiques. Il n'est pas destiné au traitement d'effluents vinicoles. De plus, ce dispositif nécessite un apport énergétique important.

Le brevet américain US-B-6 065 224 (EIGNER) concerne un dispositif et un procédé de traitement aérobie de matériaux organiques. Le dispositif comprend une enceinte fermée dans laquelle sont placées des matériaux organiques solides ou pâteux, humides. Une cuve de compostage est prévue à l'intérieur de l'enceinte. Le fond de la cuve est percé d'orifices susceptibles de laisser passer l'air ou un liquide qui s'écoule des matériaux. Les parois de la cuve ont une structure à lames parallèles de type store vénitien, afin de laisser passer l'air, qui forment en outre des supports pour le matériau.

La demande de brevet canadien CA-A-1151 784 (NEMETZ) concerne une méthode et un dispositif de séchage aérobie de déchets organiques. En particulier, ce document propose une installation de compostage en continu de déchets organiques, à l'intérieur d'une enceinte close.

La demande de brevet de brevet français FR-A-2 741 334 (SCPA) concerne un procédé et une installation de traitement d'effluents fortement chargés en composés organiques et en particulier des effluents des caves de vinification. Ce document vise à résoudre le problème de colmatage lié à la formation d'un biofilm dans les installations d'épuration dans lesquelles les effluents à épurer sont simplement brassés. Le procédé décrit nécessite l'ensemencement des effluents à l'aide d'une flore bactérienne du genre *Pseudomonas.* Le procédé nécessite en outre l'apport régulier de nutriments afin que les bactéries puissent dégrader les composés organiques présents dans les effluents. Les effluents ensemencés sont mis en circulation dans des boucles extérieures au réacteur d'ensemencement.

Ce procédé ne comprend pas d'étape d'évaporation sur substrat d'origine végétale. Il s'agit en fait un procédé d'épuration d'effluents liquides, procédé qui permet de rendre les effluents liquides acceptables par une station d'épuration.

Ainsi, un but de l'invention est de proposer un procédé de traitement d'effluents liquides par évaporation sur un substrat d'origine végétale et/ou par dégradation aérobie de la charge organique, qui palie les inconvénients précités, ainsi qu'un récipient et une installation pour la mise en oeuvre de ce procédé.

Une installation pour la mise en oeuvre de ce procédé doit répondre à de nombreuses contraintes : facilité d'utilisation, traitement efficace des effluents, coût d'exploitation réduit (notamment du point de vue énergétique), emprise au sol réduite, pour un volume donné d'effluents à traiter. A cela se superposent des contraintes environnementales non maîtrisables, en particulier des contraintes climatiques. Avantageusement, le procédé aboutit à des produits valorisables, par exemple en tant qu'amendement agricole. Il s'agit avantageusement d'un compost enrichi "vert" pour autant que les effluents traités n'aient pas été contaminés par des polluants, que le substrat soit qualifié de "vert", c'est à dire notamment qu'il respecte les normes et la législation permettant de le qualifier ainsi.

Ainsi, l'invention concerne en premier lieu un récipient destiné à contenir un substrat d'origine végétale, en vue du traitement d'effluents liquides, ledit récipient comprenant :
- un fond sensiblement plan,
- un cadre définissant une ouverture de chargement et de déchargement du récipient, le cadre étant inscrit dans un plan sensiblement parallèle au fond,
- des parois latérales s'étendant entre le fond et le cadre, de sorte que le volume défini par le fond, les parois latérales et le cadre, s'évase du fond vers le cadre,
- au moins un évidement sensiblement angulaire, délimité par des parois internes au récipient, les parois s'étendant selon la hauteur du récipient, sur au moins une partie de la hauteur du récipient, de sorte que la distance entre les parois de l'évidement diminue du fond vers le sommet de l'évidement,
- le fond et/ou les parois latérales et/ou les parois internes ayant une structure apte à assurer la contention du substrat d'origine végétale et apte à autoriser le contact entre l'air ambiant et le substrat d'origine végétale.

En second lieu, l'invention concerne une installation de traitement d'effluents liquides sur un substrat d'origine végétale comprenant :
- au moins un réservoir-tampon d'effluents liquides, éventuellement équipé de moyens (dégrillage et/ou tamisage),
- au moins un module de traitement, comprenant au moins un récipient tel que défini ci-dessus, de préférence au moins quatre récipients accolés entre eux, chaque récipient étant chargé en substrat d'origine végétale biologiquement actif,
- au moins un dispositif d'aspersion des effluents liquides par module de traitement, éventuellement équipé d'un dispositif anti-éclaboussures,
- des moyens de récupération des effluents aspergés en excès dits "lixiviats",
- des moyens de mise en circulation des effluents liquides entre le réservoir-tampon, le(s) module(s) de traitement et les moyens de récupération éventuels,
- au moins un dispositif d'accumulation de chaleur et/ou de protection du(des) module(s) contre les intempéries, de préférence une serre,
   - équipé d'au moins une entrée d'air et d'au moins une sortie d'air,
   - éventuellement équipé d'un dispositif de ventilation, de préférence une ventilation mécanique, pour établir une circulation d'air entre l'intérieur et l'extérieur du dispositif d'accumulation de chaleur et/ou de protection contre les intempéries.

L'invention concerne en troisième lieu un procédé de traitement d'effluents liquides sur un substrat d'origine végétale, par évaporation et/ou par dégradation aérobie de la charge organique des effluents liquides, comprenant les étapes essentielles suivantes :
- on prévoit un récipient tel que décrit ci-dessus,
- on charge le récipient avec du substrat d'origine végétale biologiquement actif, de préférence un compost de résidus "verts", comprenant éventuellement des éléments de structuration du substrat,
- on stocke les effluents liquides dans un réservoir-tampon, et éventuellement, on filtre les effluents liquides,
- on asperge le substrat d'origine végétale avec les effluents liquides pour maintenir l'humidité du substrat entre une limite inférieure et une limite supérieure prédéterminées, en fonction de paramètres pré-établis, notamment les conditions climatiques et/ou la période de l'année,
- on favorise la circulation d'air au contact du substrat humidifié, au moins au niveau des parois latérales et des parois internes du récipient, afin d'évacuer l'air chargé d'humidité et de le remplacer par de l'air relativement plus sec,
- et/ou on favorise l'accumulation de chaleur dans le substrat, afm d'améliorer l'évaporation des effluents liquides,
- et/ou on favorise l'activité microbiologique aérobie au sein du substrat, afin de dégrader au moins partiellement la charge organique éventuellement présente dans les effluents liquides.

Enfin, l'invention concerne un substrat végétal enrichi, susceptible d'être obtenu à l'issue d'un procédé selon l'invention, ainsi qu'un amendement pour l'agriculture ou l'horticulture, comprenant un tel substrat végétal enrichi, comprenant ou non des éléments de structuration du substrat.

Un amendement agricole, un substrat d'origine végétale ou un compost, sont dits "verts" lorsqu'ils sont susceptibles d'être utilisés dans le cadre de l'agriculture biologique.

Les effluents liquides visés sont des effluents aqueux éventuellement chargés de matière solide et/ou de matière organique. Ils proviennent en particulier des industries agro-alimentaires ou de l'agriculture. Il s'agit par exemple :
- d'effluents d'origine végétale, tels que les effluents issus de transformation comprenant une fermentation tels que les effluents de caves vinicoles, de brasseries, de cidreries, de vinaigrerie, ou sans une telle fermentation, tels que les effluents d'huileries, de fabriques de mélasse, de fabriques de coco, de conserveries ;
- et/ou d'effluents d'origine animale, tels que des effluents provenant d'élevages ovins, caprins, porcins (déjections) ou de sous-produits animaux tels que les effluents de laiteries, de fromageries ;

Selon la présente invention, il est possible de traiter des effluents liquides porteurs de très fortes charges en matière solide (matière en suspension) et en matière organique (DBO₅, DCO). En effet, le procédé de traitement comprend le stockage des effluents liquides dans un réservoir tampon et dans le substrat d'origine végétale, sur une période de temps prolongée. Cela permet de lisser d'éventuels pics de charges solides et/ou organiques sur ladite période prolongée de stockage. Il est ainsi possible d'admettre, sur une période de quelques jours correspondant à un tel pic de matière organique, les charges suivantes :
- demande chimique en oxygène (DCO) : 100g/L
- demande biologique en oxygène à 5 jours (DBO₅) : 50g/L

La matière solide en suspension (MES) est retenue par divers moyens de filtration (par dégrillage et/ou tamisage) en amont du substrat d'origine végétale. En outre, la matière en suspension susceptible de passer à travers les moyens de filtration peut être retenue au niveau du substrat d'origine végétale, qui joue également le rôle d'un filtre. Pour autant que les effluents soient correctement filtrés (dégrillés et tamisés), en amont du réservoir tampon et de la cuve de marnage éventuelle, la matière en suspension ne constitue pas un obstacle au bon déroulement du procédé. Il est ainsi envisageable de traiter des effluents liquides contenant par exemple jusqu'à 15g/L de matière en suspension résiduelle, c'est-à-dire dans les effluents aspergés.

Le réservoir tampon sert non seulement à régulariser le volume d'effluents mais également à régulariser la charge en matière organique et en matière en suspension.

Pour mettre en oeuvre le procédé de traitement, le demandeur a développé, d'une part, un récipient particulier, et d'autre part, une installation, pour la mise en oeuvre du procédé.

Le développement du récipient a été guidé par les caractéristiques et les contraintes des deux principaux processus de traitement mis en oeuvre, nommément l'évaporation de la phase liquide des effluents et la dégradation aérobie de la charge organique contenue dans les effluents. Les caractéristiques du support du traitement, en l'occurrence un substrat d'origine végétale de type compost, ont également été prises en compte lors de la mise au point du récipient.

La dégradation aérobie de la charge organique a lieu pour autant que la flore microbienne (bactéries, champignons filamenteux, levures, protozoaires et autres) et la microfaune (insectes, lombrics et autres invertébrés) disposent des éléments qui sont nécessaires à leur développement. Il s'agit en particulier d'une bonne oxygénation, assurée par l'aération de l'effluent liquide et/ou du substrat d'origine végétale, d'un apport de nutriments, de chaleur et d'un pH adéquat.

L'évaporation dépend notamment des différentiels de température et d'humidité qui existent entre le substrat d'origine végétale et l'air ambiant. Elle dépend également de la vitesse du vent au contact des surfaces d'évaporation. Il est donc utile de favoriser le renouvellement régulier de l'air au sein et autour du substrat d'évaporation et de maintenir le substrat et l'air à une température suffisamment élevée, compatible avec la survie de la flore microbienne et de la microfaune, notamment la biomasse mésophile.

La qualité du substrat revêt ainsi une certaine importance pour la bonne conduite du procédé de traitement. En effet, le substrat possède plusieurs fonctions, en particulier :
- une fonction de filtration de la matière solide en suspension dans les effluents ;
- une fonction d'absorption de la phase liquide des effluents, à l'instar d'une éponge, afin de retenir une quantité d'effluents favorable à l'évaporation et d'éviter le lessivage,
- une fonction de support de la biomasse aérobie (la flore microbienne et la microfaune), laquelle dégrade la charge organique présente dans les effluents,
- une fonction de nutrition de la biomasse aérobie, fonction d'autant plus importante que l'effluent et peu chargée en nutriment, ce qui est notamment le cas des effluents vinicoles,
- une fonction de neutralisation des odeurs qui peuvent se développer à la suite du stockage prolongé de l'effluent dans le réservoir tampon, en amont du système de traitement.

Le procédé selon l'invention tire parti de l'évaporation de la phase aqueuse des effluents traités et de la dégradation de la charge organique des effluents par la biomasse aérobie hébergée et nourie par le substrat et par les effluents. Si le phénomène de dégradation est moins important que celui d'évaporation, il reste important. En effet, c'est grâce à la biomasse aérobie que la charge organique est réduite, que le pH augmente, ce qui réduit les risques de contamination de l'environnement par d'éventuelles levures, en particulier du genre *Brettanomyces* et que les odeurs susceptibles de se développer dans le réservoir tampon en amont sont largement neutralisées.

Afin d'optimiser le traitement d'effluents liquides, le demandeur a mis au point, selon un premier aspect de l'invention, un récipient spécifique destiné à contenir un substrat d'origine végétale. Ce récipient comprend :
- un fond sensiblement plan,
- un cadre définissant une ouverture de chargement et de déchargement du récipient, le cadre étant inscrit dans un plan sensiblement parallèle au fond,
- des parois latérales s'étendant entre le fond et le cadre, de sorte que le volume défini par le fond, les parois latérales et le cadre, s'évasent du fond vers le cadre,
- au moins un évidement sensiblement angulaire, délimité par des parois internes au récipient, les parois s'étendant selon la hauteur du récipient, sur au moins une partie de la hauteur du récipient, de sorte que la distance entre les parois de l'évidement diminuent du fond vers le sommet de l'évidement,
- le fond et/ou les parois latérales et/ou les parois internes ayant une structure apte à assurer la contention du substrat d'origine végétale et apte à autoriser le contact entre l'air ambiant et le substrat d'origine végétale.

Cette géométrie particulière du récipient permet d'augmenter la surface efficace d'évaporation, c'est-à-dire la surface de contact entre l'air ambiant et le substrat d'origine végétale. Cette surface est défmie en particulier par les parois latérales et les parois internes du récipient.

Par ailleurs, lors de l'écoulement des effluents liquides à travers le substrat, en supposant que cet écoulement est sensiblement vertical, une partie des effluents atteindra l'une des parois latérales ou l'une des parois internes. Cela permet notamment de favoriser le mouillage de la surface efficace d'évaporation, ce qui améliore la durée de contact entre l'effluent liquide et l'air ambiant et donc l'efficacité d'évaporation des effluents liquides.

En outre, la présence d'au moins un évidement sensiblement angulaire au sein du récipient, favorise la circulation d'air dans le substrat et autour du substrat. Cela améliore également l'oxygénation du substrat. Par ailleurs, la surface efficace d'évaporation, rapportée à l'emprise au sol, est ainsi augmentée.

Avantageusement, le volume du récipient est inscrit dans un tronc de cône, de préférence un cône de révolution. Pour mémoire, on rappelle qu'un cône est la surface que décrit une droite -la génératrice- passant par un point fixe et qui s'appuie sur courbe fermée -la directrice- non coplanaire au point fixe. Pour un cône de révolution, la directrice est un cercle. Avantageusement, le récipient est sélectionné parmi les troncs de polyèdres réguliers, de préférence un tronc de pyramide à base carrée ou à base hexagonale régulière, et des troncs de cônes de révolution.

On préfère les récipients ayant la forme d'un tronc de pyramide car ils offrent une plus grande surface d'échange pour un coût équivalent à celui des troncs de cône de révolution.

Les récipients tronconiques présentent l'avantage supplémentaire d'être facilement empilables à vide et chargés. Le déchargement du substrat est aussi facilité par l'utilisation de récipients tronconiques. En outre, pour faciliter leur manutention, les récipients peuvent être équipés de dispositifs de levage, tels que des oeillets de levage, connus de l'homme du métier. Le récipient peut, le cas échéant, être manipulé à l'aide d'un outillage approprié pour l'enlever et le déposer, et pour le retourner et le vider.

De préférence, au moins un évidement traverse le récipient de part en part, de sorte que l'air ambiant est susceptible de circuler dans l'évidement. Comme cela a été mentionné ci-dessus, la distance entre les parois de l'évidement diminue du fond du récipient vers le sommet de l'évidement. Cela a pour effet d'éviter la formation d'un "surplomb" au niveau de l'évidement, au sein du substrat. Un tel surplomb gênerait un remplissage homogène du récipient et pourrait constituer une zone d'accumulation d'effluents liquides. Une telle zone d'accumulation d'effluents liquides pourrait être le siège d'une prolifération de microorganismes anaérobies, qui génèrent le plus souvent de mauvaises odeurs.

Par exemple, l'évidement possède une section, selon un plan sensiblement perpendiculaire au fond, sélectionnée parmi le groupe constitué des triangles, de préférence isocèles et des courbes, de préférence paraboliques.

Selon une autre définition, la pente des parois latérales et la pente des parois internes, par rapport à un axe sensiblement vertical, est comprise entre 2° et 35° inclus, de préférence, de 5° à 20° et mieux encore, de 12° à 15°. Lorsque ladite paroi n'est pas rectiligne mais courbe, on pourra évaluer la pente par rapport à une droite passant par les extrémités de ladite courbe.

Selon une caractéristique préférée, le récipient comprend un évidement traversant, ayant une forme de dièdre régulier, voire deux évidements traversants ayant une forme de dièdre régulier, disposés parallèlement ou perpendiculairement entre eux.

Les parois latérales, les parois internes et le fond du récipient possèdent une fonction de structuration du récipient et une fonction de contention. La fonction de structuration garantit la tenue mécanique du récipient au cours du temps, notamment pendant la manipulation des récipients. Il s'agit de conférer aux massifs de substrat d'origine végétale une forme générale appropriée au bon déroulement du procédé de traitement, notamment par la définition de la surface d'évaporation. La fonction de contention peut être assurée par des éléments rigides ou souples, pour autant qu'ils permettent de maintenir le substrat d'origine végétale à l'intérieur du volume visé.

Il est donc préférable que les éléments participant à la fonction de structuration soient rigides, tandis que les éléments participant uniquement à la fonction de contention peuvent être rigides ou souples.

Les parois latérales et les parois internes du récipient peuvent être constituées de différents matériaux. Le fond, les parois latérales et les parois internes ont une structure grillagée. Il peut s'agir par exemple d'un matériau de type filet ou d'un matériau rigide. Par exemple, le matériau est un matériau métallique et/ou un matériau plastique. On préfère les matériaux de type acier inoxydable ou acier protégé par divers traitements (peinture, électrochimique). D'autres matériaux sont envisageables, par exemple les matériaux plastiques, tels que le polypropylène, le polyéthylène, ou des matériaux composites filiformes comprenant une âme à base de fibres assurant la tenue mécanique et limitant les déformations, entourée d'un matériau protecteur.

Selon une autre caractéristique, la structure grillagée comprend des premiers éléments de structuration et des seconds éléments de contention, les premiers éléments ayant une dimension caractéristique (par exemple leur diamètre) supérieure à celle des seconds éléments lorsque les premiers et les seconds éléments sont constitués d'un même matériau. Par exemple, les éléments de contention se présentent sous la forme d'un filet ou d'un treillis plastique fixé aux premiers éléments de structuration métalliques ou plastiques rigides. L'homme du métier pourra aisément déterminer les caractéristiques dimensionnelles des éléments de structuration et de contention, en fonction du matériau employé.

Avantageusement, les premiers éléments et les seconds éléments sont constitués de fils rigides, de préférence métalliques et/ou plastiques.

Dans le cas où les éléments de contention se présentent sous la forme d'un filet, les éléments de structuration peuvent se présenter sous la forme d'anneaux concentriques écartés les uns des autres le long de la hauteur du récipient. Le filet est disposé à l'intérieur des anneaux, de sorte que le remplissage du récipient ainsi formé avec du substrat a pour effet de déployer le filet contre les anneaux.

Selon une autre variante, le fond et les parois latérales et internes peuvent comprendre un matériau souple, solidaire du cadre. Un évidement peut dans ce cas être matérialisé à l'aide d'une ou plusieurs traverses situées dans un plan sensiblement parallèle à celui du cadre, et sur lesquelles repose le matériau souple. Le remplissage du récipient avec du substrat a pour effet de déployer le matériau souple.

Le récipient est largement ouvert, en ce sens que son contenu -le substrat humidifié par les effluents- est en contact direct avec l'extérieur au niveau des parois latérales, des parois internes, mais également au niveau de l'ouverture de chargement et de déchargement ainsi qu'à celui du fond. De plus, comme on le verra ci-dessous, la structure du substrat est telle qu'une circulation d'air au sein du substrat peut naturellement avoir lieu, sans qu'il soit nécessaire de mettre en place une circulation forcée de l'air dans le substrat, par exemple par injection d'air.

En outre, contrairement à des installations de l'art antérieur, le substrat humidifié n'est pas contenu dans une enceinte close qui nécessite d'établir une circulation forcée de l'air depuis le milieu extérieur vers l'intérieur de l'enceinte, puis de nouveau vers l'extérieur ou vers des installations de traitement de l'air extrait de l'enceinte close. Dans de telles installations, le substrat est en contact avec l'air emprisonné dans l'enceinte close. Selon l'invention, l'air ambiant, en particulier l'air extérieur, est directement en contact avec le substrat.

Les récipients peuvent être regroupés de diverses manières entre eux. En fonction de la géométrie du cadre définissant l'ouverture de chargement et de déchargement, les récipients peuvent par exemple être réunis par groupes de trois récipients (cadre triangulaire ou hexagonal régulier), quatre récipients (cadre carré ou hexagonal régulier), six récipients (cadre hexagonal) ou neuf récipients (cadre carré). Les exemples donnés précédemment ne sont pas limitatifs des combinaisons envisageables par l'homme du métier, notamment avec des cadres d'autres formes, par exemple circulaires, ou avec d'autres nombres de récipients.

L'invention concerne en outre une installation de traitement d'effluents liquides sur un substrat d'origine végétale. Cette installation comprend :
- au moins un réservoir-tampon d'effluents liquides, éventuellement équipé de moyens de filtration (dégrillage et/ou tamisage),
- au moins un module de traitement, comprenant au moins un récipient tel que défini précédemment,
- au moins un dispositif d'aspersion des effluents liquides par module de traitement, éventuellement équipé d'un dispositif anti-éclaboussures,
- des moyens de récupération des effluents aspergés en excès,
- des moyens de mise en circulation des effluents liquides entre le réservoir tampon, le(s) module(s) de traitement et les moyens de récupération éventuelle,
- au moins un dispositif d'accumulation de chaleur et/ou de protection du (des) module(s) contre les intempéries.

De préférence, le module comprend au moins quatre récipients accolés entre eux, chaque récipient étant chargé en un substrat d'origine végétale biologiquement actif. Mieux encore, chaque module comprend quatre récipients accolés en carré.

Le dispositif d'accumulation de chaleur et/ou de protection contre les intempéries est équipé d'au moins une entrée d'air et d'au moins une sortie d'air et il est éventuellement équipé d'un dispositif de ventilation, de préférence mécanique, pour établir une circulation d'air entre l'intérieur et l'extérieur du dispositif.

Ce dispositif est avantageusement une serre, connue de l'homme de l'art. La serre a pour fonction, outre la protection contre les intempéries et l'accumulation de chaleur, de canaliser le flux d'air.

Le dispositif de ventilation permet d'extraire l'air humide de la serre et de le remplacer par de l'air provenant de l'extérieur, potentiellement plus sec. De préférence, la ventilation est gérée en fonction des paramètres climatiques

En outre, l'installation peut être équipée de moyens de mesure de paramètres climatiques, et/ou de moyens de mesures des niveaux d'effluents dans le réservoir et dans les moyens de récupération éventuelle, et/ou des moyens de mesure des volumes d'effluents liquides mis en circulation, et/ou des moyens de contrôle et de commande du fonctionnement de l'installation, éventuellement asservis aux moyens de mesures.

Pour optimiser le fonctionnement de l'installation, en particulier pour réduire ses besoins énergétiques (électricité nécessaires au fonctionnement, par exemple, du dispositif de ventilation), il peut être avantageux d'orienter l'axe principal de la serre selon une direction parallèle à la direction des vents dominants de la région où se trouve l'installation. Par ailleurs, l'orientation de la serre peut également être déterminée de façon à bénéficier du meilleur ensoleillement, ce qui peut favoriser l'efficacité de l'évaporation. Par exemple, la serre peut être orientée de sorte que la différence de température entre deux parois opposées de la serre soit la plus grande possible, du fait d'une différence d'ensoleillement. On peut supposer en effet qu'une telle orientation devrait accroître les phénomènes de turbulence dans la serre, et donc améliorer le brassage de l'air.

Les moyens de récupération des effluents aspergés en excès, les lixiviats, peuvent notamment se présenter sous diverses formes, qui empêchent les lixiviats de s'écouler directement dans le milieu extérieur. De préférence, il s'agit d'une dalle de récupération sur laquelle est(sont) installé(s) le(s) module(s).

En outre, on peut prévoir un réservoir de marnage, apte à recevoir les effluents provenant du réservoir-tampon et les effluents aspergés en excès, le réservoir de marnage étant équipé de moyens de mise en circulation desdits effluents.

La dalle reçoit les effluents aspergés en excès qui percolent à travers le substrat d'origine végétale. Par ailleurs, si le volume d'effluents aspergés en excès est trop important, les moyens de canalisation, par exemple des rigoles, canalisent le surplus d'effluents ayant percolé à travers le substrat, par exemple vers un réservoir de marnage.

La dalle de récupération a plusieurs fonctions. D'une part elle permet de récupérer les lixiviats afin qu'ils ne s'écoulent directement dans le milieu extérieur. D'autres part, elle peut constituer une surface d'évaporation supplémentaire et éventuellement servir de réservoir additionnel.

La dalle de récupération peut être équipée d'une ou plusieurs rigoles ou autres moyens de canalisations. La dalle de récupération peut par exemple être munie d'une faible pente, afin de canaliser les lixiviats.

Comme on a pu le voir ci-dessus, les effluents liquides sont des effluents aqueux éventuellement chargés de matière solide et/ou de matière organique. Avant d'être stockés dans le réservoir tampon, les effluents aqueux sont préférentiellement dégrillés, c'est-à-dire qu'ils sont débarrassés des résidus solides les plus grands, par exemples les rafles, les sarments. Ils peuvent en outre être filtrés en amont du réservoir-tampon, préalablement à leur mise en circulation dans l'installation, en aval ou à tout autre point de la circulation des effluents. Ces opérations filtration par dégrillage et/ou tamisage, permettent de limiter le colmatage et la détérioration des circuits hydrauliques.

Les effluents sont relevés à l'aide d'une ou plusieurs pompes, pour asperger le substrat par bâchées, éventuellement pour alimenter le réservoir de marnage à partir du réservoir-tampon, et éventuellement pour relever les surplus d'effluents vers le réservoir-tampon ou le réservoir de marnage. De préférence, les effluents sont dilacérés lors du relevage, afin de briser d'éventuelles chaînes bactériennes ou des résidus.

Avantageusement, l'aspersion est pilotée automatiquement en fonction des paramètres climatiques lesquels sont mesurés en temps réel ou selon une fréquence prédéterminée (par exemple toutes les 5, 10, 15 minutes et/ou toutes les 1, 2, 3, 6, 8, 12, 24 heures). Le pilotage de l'installation est réalisé en tenant compte des paramètres climatiques sur des intervalles de temps caractéristiques des phénomènes pilotés et/ou mesurés (par exemple de l'ordre de l'heure). Il est également possible de programmer l'aspersion en fonction des moyennes climatiques du lieu de l'installation, sans tenir compte du climat réel. Les paramètres de température et d'humidité du substrat, de l'air à la surface du substrat et de l'air éloigné du substrat, dans la serre, peuvent également être pris en compte, afin d'optimiser l'aspersion et l'évaporation des effluents liquides.

L'humidité et la température de l'air varient au cours de saisons, ainsi que la vitesse du vent ou de l'air ventilé/extrait de la serre. De même, la durée du jour et donc la durée d'ensoleillement potentiel, varient au cours de l'année. Or l'accumulation de chaleur dans le substrat peut dépendre de la chaleur accumulée par la serre, sous l'effet de l'ensoleillement. Les paramètres d'aspersion (débit par unité de surface, durée des période d'aspersion et des périodes sans aspersion, fréquence) sont adaptés en fonction de ces caractéristiques climatiques (humidité, température, vitesse du vent au contact des surfaces d'évaporation) par exemple, préprogrammés ou déterminés relativement aux conditions climatiques mesurées.

Il est également possible de réguler plus finement l'aspersion, en tenant compte de l'efficacité réelle d'évaporation, par exemple en mesurant la quantité de lixiviats obtenus après une période d'aspersion. La prise en compte de l'efficacité réelle de l'évaporation des effluents permet, notamment, de s'affranchir de la mesure des paramètres climatiques en temps réel pour réguler l'aspersion.

Selon une variante de l'invention, la régulation de la ventilation, lorsqu'il s'agit d'une ventilation mécanique, peut être réalisée à partir de paramètres similaires à ceux employés pour la régulation de l'aspersion.

Le substrat d'origine végétale est un compost de résidus "vert". De préférence, il s'agit d'un compost mûr, c'est-à-dire qui a atteint la fin du processus de compostage. Bien entendu, un mélange de composts est tout à fait envisageable. Par exemple, le substrat d'origine végétale peut comprendre du compost mûr de résidus verts, un mélange de tels composts, un mélange avec des éléments structurants ligneux, ou bien uniquement des ligneux en mélange (brindilles, plaquettes...).

Le substrat comprend éventuellement des éléments de structuration du substrat. Il s'agit en particulier de plaquettes, de débris ou de résidus de bois, possédant de préférence une forme allongée. De par leur forme et leur rigidité intrinsèques, ces éléments peuvent former un "squelette" à l'intérieur du substrat d'origine végétale. Il est également envisageable d'employer des éléments en plastique comme éléments de structuration, auquel cas il est nécessaire d'en débarrasser le substrat enrichi avant utilisation comme amendement. Les éléments de structuration permettent notamment d'éviter l'effondrement du substrat sur lui-même. Un tel effondrement aurait des conséquences préjudiciables en raison de l'augmentation de la densité du massif de substrat d'origine végétale, de la diminution de la porosité, et de la diminution de la surface d'échange totale.

Le compost possède en outre une granulométrie adaptée, pour limiter le lessivage et retenir les éventuelles charges de matière solide en suspension.

On préfère mettre en oeuvre un compost "vert" afin de pouvoir utiliser le produit obtenu à l'issu du procédé de traitement, comme amendement agricole, notamment pour l'agriculture biologique. En particulier, le compost sélectionné respecte au moins l'une des normes de qualités suivantes, relatives à l'élaboration des composts, aux intrants, au processus de compostage, à la valeur agronomique, à la présence d'éléments traces :
- Norme NF U 44-051 relative aux amendements organiques tel qu'un compost végétal,
- Ecolabel CEE qui concerne les "amendements pour sol et milieu de culture",
- Arrêté type n°2170 qui concerne la "fabrication des engrais et supports de culture à partir de matières organiques et mettant en oeuvre un procédé de transformation biologique aérobie (compostage) des matières organiques".

Avantageusement, les moyens d'aspersion de l'installation comprennent une buse d'aspersion apte à asperger une surface carrée, hexagonale ou circulaire, selon la forme du cadre définissant l'ouverture de chargement et de déchargement du récipient, ou du module constitué de plusieurs récipients. On choisit une surface d'aspersion qui permet d'éviter d'asperger en dehors des récipients. Par ailleurs, la buse d'aspersion est conçue de sorte à minimiser le risque de colmatage lié à la présence de matière solide et/ou de matière organique dans l'effluent aqueux.

La buse d'aspersion est sélectionnée, d'une part, afin d'obtenir une surface aspergée uniformément et la plus grande possible, et d'autre part, afin de simplifier l'entretien de l'installation.

En outre, les moyens d'aspersion peuvent être équipés d'un dispositif anti-éclaboussures qui limite l'entraînement des gouttelettes d'effluents aspergées par le flux d'air. Cela a deux fonctions, d'une part, s'assurer que les effluents sont bien aspergés sur le substrat d'origine végétale et, d'autre part, éviter les problèmes de mauvaises odeurs liées à la dégradation anaérobie de la matière organique et à la diffusion de gouttelettes d'effluents lors de l'aspersion.

Selon un autre aspect de l'invention, le demandeur a mis au point un procédé de traitement d'effluents liquides sur un substrat d'origine végétale par évaporation et/ou par dégradation aérobie de la charge organique des effluents liquides. Ce procédé comprend les étapes essentielles suivantes :
- on prévoit un récipient, éventuellement au sein d'un module de traitement, tels que définis ci-dessus,
- on charge le récipient avec du substrat d'origine végétale, biologiquement actif, de préférence un compost de résidus "verts", comprenant éventuellement des éléments de structuration du substrat,
- on stocke les effluents liquides dans un réservoir tampon, et éventuellement on filtre les effluents liquides,
- on asperge le substrat d'origine végétale avec les effluents liquides pour maintenir l'humidité du substrat entre une limite inférieure et une limite supérieure prédéterminées, en fonction de paramètres pré-établis, notamment les conditions climatiques et/ou la période de l'année,
- on favorise la circulation de l'air au contact du substrat humidifié, au moins au niveau des parois latérales et des parois internes du récipient, afin d'évacuer l'air chargé d'humidité et de le remplacer par de l'air relativement plus sec,
- et/ou on favorise l'accumulation de chaleur dans le substrat, afin d'améliorer l'évaporation des effluents liquides,
- et/ou on favorise l'activité microbiologique aérobie au sein du substrat, afin de dégrader au moins partiellement la charge organique éventuellement présente dans les effluents liquides.

Avantageusement, le procédé de traitement est mis en oeuvre dans une installation selon l'invention, décrite ci-dessus.

Selon ce procédé, la durée des périodes d'aspersion varie de quelques secondes à quelques minutes selon un débit par unité de surface aspergée de 0,5 L/min/m² à 20 L/min/m². De préférence, on adapte le débit par unité de surface pour éviter les risques de noyage du substrat.

Ces périodes d'aspersion alternent avec des périodes sans aspersion d'une durée de quelques minutes à quelques heures (de l'ordre de 10 minutes à 6 heures par exemple). Ce fonctionnement séquencé par bâchées permet de maintenir l'humidité du substrat entre les limites prédéterminées. La limite inférieure est sélectionnée afin d'assurer un minimum d'évaporation, même dans des conditions climatiques relativement défavorables (température basse et/ou forte humidité relative de l'air). La limite supérieure est choisie afin d'éviter le développement d'une fermentation anaérobie préjudiciable au bon fonctionnement de l'installation, en particulier en raison de l'apparition d'odeurs désagréables.

Pour éviter le colmatage ou le croûtage de la surface d'aspersion, on peut réaliser périodiquement un ratissage, un sarclage, ou toute opération similaire, de la surface d'aspersion. Par exemple, cette opération est réalisée une fois tous les quatre mois ou une fois par trimestre. Il est avantageux de la réaliser également après une longue période d'aspersion avec des effluents fortement chargés.

L'excès d'effluents percole à travers le substrat d'origine végétale et s'écoule par le fond des récipients et le long des parois internes. Cet excès d'effluents est récupéré et on le remet au moins en partie en circulation.

L'aspersion peut être régulée, par exemple, selon un premier niveau, en fonction des conditions climatiques ou en fonction de la période de l'année. Un deuxième niveau de régulation de l'aspersion, ou régulation de fmition, pourra tenir compte de l'efficacité réelle de l'évaporation et du traitement des effluents. En effet, le premier niveau de régulation est généralement automatisé et ne tient pas nécessairement compte de l'efficacité réelle de l'évaporation et du traitement des effluents, mais uniquement de facteurs extérieurs (données climatiques, mois). L'efficacité réelle de l'évaporation et du traitement peut être évaluée, par exemple, en mesurant le débit d'effluents en excès ayant percolé à travers le substrat (les lixiviats). Plus le débit de lixiviat est grand, plus faible est l'efficacité réelle de l'évaporation et du traitement des effluents.

Pour mesurer le volume débit de lixiviats éventuels, on peut prévoir un réservoir destiné à collecter les lixiviats. Ce réservoir de collecte peut être disposé en contrebas d'une dalle de récupération des lixiviats disposée sous les modules de traitement. La mesure peut consister en une mesure du volume débit effectif de lixiviats obtenus après l'aspersion d'une bachée, ou simplement en un signal de type tout-ou-rien, indiquant qu'un niveau de lixiviat a été atteint. En fonction de cette mesure, les bachées peuvent être rapprochées (forte efficacité de traitement) ou espacée (faible efficacité de traitement).

Les lixiviats peuvent ensuite être ramenés vers une cuve de marnage, en continu ou non. Selon une autre variante, les lixiviats stockés dans le réservoir de collecte sont directement aspergés vers la surface d'aspersion.

Par ailleurs, lorsqu'une activité biologique se développe au sein du substrat et dégrade la charge organique, une partie du substrat est consommée par la biomasse. Il peut donc être nécessaire de compenser périodiquement cette consommation, ainsi qu'un éventuel tassement, par un apport de substrat supplémentaire.

Le substrat peut être utilisé pendant quelques mois à trois ans, de préférence de un à deux ans, avant d'être déchargé et remplacé par du substrat frais. Après deux ans de traitement, ce qui correspond à deux cycles annuels de culture, le substrat est considérablement enrichi en matière organique. Cette matière organique provient de la dégradation de la charge organique des effluents et de l'activité de la biomasse présente dans le substrat.

Selon un autre aspect, l'invention concerne un substrat végétal enrichi susceptible d'être obtenu à l'issu d'un procédé de traitement tel que décrit ci-dessus. Elle concerne également un amendement pour l'agriculture ou l'horticulture, comprenant un substrat végétal enrichi. Le substrat végétal enrichi et l'amendement possèdent un fort taux d'humus (matière organique) : rapport massique de la matière organique à la matière sèche supérieur à 30 %, de préférence de 50 à 60%. On mesure ce rapport massique sans inclure les éventuels éléments de structuration du substrat. A la fin du traitement des effluents liquides et de l'enrichissement du substrat végétal, si ce dernier contenait des éléments de structuration (plaquettes de bois, éléments ligneux ou autres), il est possible de le débarrasser desdits éléments avant de l'employer comme ou dans un amendement.

L'amendement obtenu possède un bon état structural ainsi qu'une capacité de rétention en eau et d'aération particulièrement adaptés à un usage agricole. Par ailleurs, les éléments de structuration de type éléments ligneux ou plaquettes de bois, confèrent à l'amendement des propriétés de lutte contre l'érosion du sol.

L'invention sera mieux comprise à la lecture des exemples de réalisation qui vont suivre, illustrés par les figures suivantes :
- la figure 1 est une représentation schématique en perspective d'un récipient selon l'invention, comprenant un évidement diédrique,
- les figures 2a et 2b sont des représentations schématiques en perspective de deux variantes du récipient selon l'invention, chaque variante comprenant deux évidements diédriques disposés parallèlement (figure 2a) et perpendiculairement (figure 2b) entre eux,
- la figure 3 est une variante d'un récipient selon l'invention comprenant quatre sous-unités accolées entre-elles,
- la figure 4 est une vue schématique en perspective d'un module de traitement comprenant quatre récipients selon l'invention, où le module est coiffé d'un dispositif anti-éclaboussures,
- la figure 5 est une représentation schématique d'une installation selon l'invention,
- la figure 6 est une représentation schématique des éléments de l'installation selon l'invention disposés sous serre, vus selon la direction principale de circulation de l'air dans la serre.

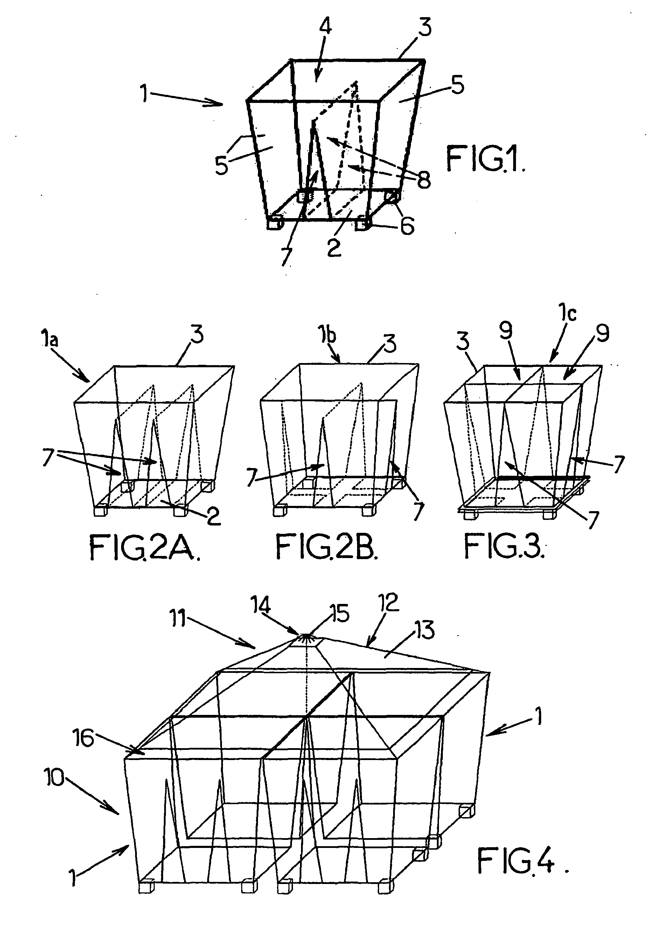

La figure 1 représente un récipient 1 ayant une forme de tronc de pyramide à base carrée. Le fond 2 et le cadre 3 du récipient 1 sont sensiblement parallèles l'un à l'autre. Le cadre 3 définit une ouverture 4 de chargement et de déchargement du récipient 1. Les dimensions du cadre 3 sont supérieures à celles du fond 2, de sorte que les parois latérales 5 du récipient 1 se trouvent légèrement inclinées par rapport à la verticale. Ainsi, le récipient s'évase de bas en haut, c'est-à-dire du fond 2 vers le cadre 3.

Le récipient 1 peut reposer sur des pieds 6, ce qui permet de surélever légèrement le récipient. Cela présente un double avantage : d'une part, le fond 2 du récipient peut servir de surface d'évaporation complémentaire, d'autre part, lorsqu'un excès d'effluents liquides s'écoule à travers le substrat, les effluents ne s'accumulent pas au niveau du fond 2, mais s'égouttent et peuvent ainsi être récupérés et remis en circulation ultérieurement.

Un évidement 7 est ménagé dans le récipient 1 comme illustré à la figure 1. L'évidement 7 est limité par deux parois 8 internes au récipient. L'évidement est sensiblement angulaire : ses parois 8 s'écartent l'une de l'autre du haut vers le bas du récipient.

Le fond 2, les parois latérales 5 et les parois internes 8 sont fabriquées avec un grillage en acier inoxydable comprenant en alternance du fil d'acier inoxydable de diamètre au moins 5 mm et du fil d'acier inoxydable de diamètre 3 mm. Le grillage présente une maille de 25 mm de côté. De même que le fil de petit diamètre, le fil de diamètre supérieur a une fonction de contention du substrat d'origine végétale. En outre, le fil de diamètre supérieur participe à la rigidité du récipient 1 et à sa structure.

Les récipients 1 sont destinés à contenir un substrat d'origine végétale, par exemple un compost ou tout autre support offrant les mêmes fonctions décrites ci-dessous. Les récipients comprennent de préférence les éléments de structure suivants : un fond 2, quatre parois latérales 5 et deux évidements internes 7 diédriques. Ces éléments sont constitués d'un treillis structurel à grandes mailles consolidées, si nécessaire par des renforts. Le treillis structurel supporte un second treillis de contention à petite maille. Les éléments de structure sont rendus solidaires entre-eux par des liaisons fixes, telles que des soudures, ou démontables. Le récipient doit posséder une résistance suffisante pour supporter les contraintes appliquées en fonctionnement, sans dommage notable. En particulier, il doit pouvoir résister à des conditions physico-chimiques « agressives » : aspersion et évaporation d'un liquide de pH compris entre 3,5 et 10, air saturé en vapeur d'eau, température pouvant varier entre -30° C et 60°C.

Par souci de faciliter la manutention des récipients, on prévoit un poids total chargé inférieur à 1 tonne (récipient + substrat d'origine végétale).

Les figures 2a, 2b et 3 représentent des variantes de récipients conformes à l'invention. Les récipients des figures 2a et 2b possèdent une structure similaire à celle du récipient illustré à la figure 1. Les différences résident dans la présence de deux évidements 7 au lieu d'un seul. Le récipient 1a de la figure 2a comporte deux évidements 7 disposés parallèlement entre-eux. Le récipient 1b de la figure 2b comporte deux évidements 7 disposés perpendiculairement entre-eux.

La figure 3 illustre le cas où le récipient 1c est constitué de plusieurs sous-unités 9, en l'occurrence quatre sous-unités. Ces quatre sous-unités 9 sont accolées entre-elles et peuvent être rendues solidaires à l'aide du cadre 3 ainsi qu'au niveau d'une sole commune. Dans ce cas, les parois latérales de chacune des sous-unités 9 se trouvent soit vis-à-vis de la paroi latérale d'une autre sous-unité 9, soit au niveau de la périphérie du récipient 1c. Les parois latérales situées en vis-à-vis des autres forment entre-elles un ou plusieurs évidements 7.

La figure 4 représente un module 10 de traitement. Le module comprend de préférence quatre récipients 1 accolés entre-eux. Un dispositif anti-éclaboussures 11 est disposé au-dessus des quatre récipients 1. Le dispositif anti-éclaboussures 11 comprend une armature pyramidale 12 sur laquelle repose une toile en textile tissé ou non-tissé, naturelle, synthétique ou en mélange. Le sommet 14 du dispositif anti-éclaboussures 11 est tronqué et offre un passage à un dispositif d'aspersion 15. Le dispositif d'aspersion 15 est centré par rapport au récipient qui forme le module 10.

En outre, la toile 13 n'est pas tendue sur toute la hauteur de l'armature mais laisse un passage 16 au niveau de la base de l'armature 12, afin de laisser l'air circuler au niveau de l'ouverture 4 des récipients 1. Cette ouverture correspond à la surface d'aspersion.

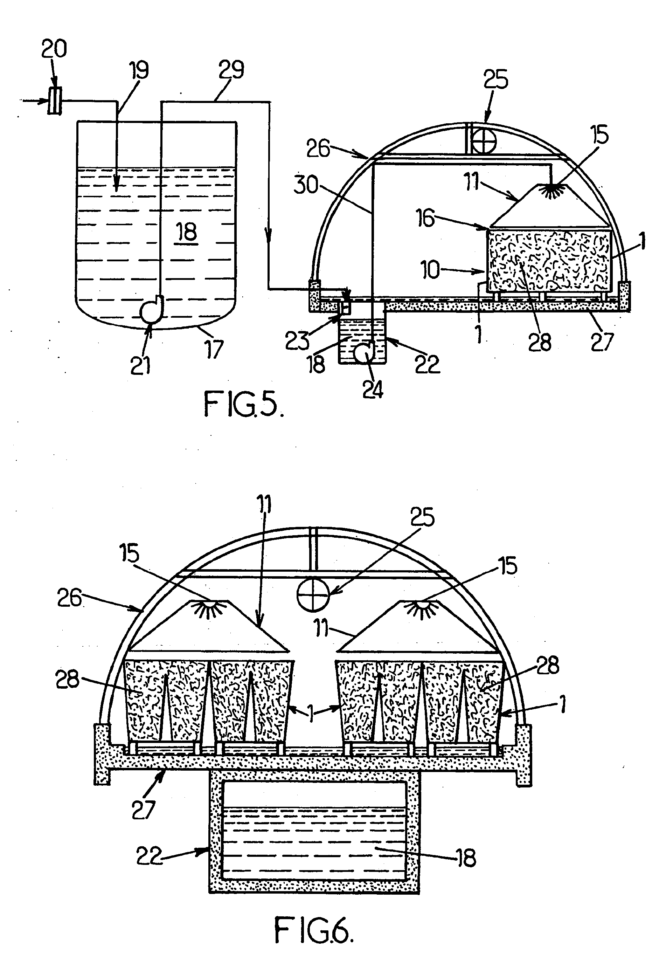

Comme illustré aux figures 5 et 6, l'installation de traitement d'effluents liquides sur un substrat 28 d'origine végétale comprend un réservoir tampon 17 d'effluents liquides 18. En amont de l'alimentation 19 du réservoir tampon 17 en effluents liquides, on trouve un dispositif de dégrillage 20. Le dégrillage permet de retenir les matières solides les plus grosses telles que les rafles, les sarments et autres, dans le cas de traitement d'effluents vinicoles. Eventuellement, le dispositif de dégrillage 20 peut être suivi d'un filtre dont la maille est de l'ordre du millimètre.

Une pompe 21 est installée à un point bas du réservoir tampon 17, pour alimenter un réservoir de marnage 22 par l'intermédiaire de canalisations 29. La pompe peut être associée à un système de dilacération. Le réservoir de marnage permet de maintenir une charge hydraulique quasi constante en amont du système d'aspersion 15.

L'installation comprend en outre au moins un module de traitement. Comme illustré aux figures 4 à 6, le module comprend de préférence quatre récipients 1 surmontés d'un dispositif anti-éclaboussures 11. Un dispositif d'aspersion 15 des effluents liquides 18 est disposé au sommet de la tente anti-éclaboussures 11. Le dispositif d'aspersion 15 peut être relié directement au réservoir tampon 17 par l'intermédiaire de canalisations 29, 30. Avantageusement, le réservoir de marnage 22 est disposé à un point bas de l'installation. Le réservoir de marnage 22 est alimenté en effluents liquides à partir du réservoir tampon 17. De préférence, des moyens de filtration 23 sont prévus en amont de l'alimentation du réservoir de marnage 22 afin de filtrer finement les effluents. Le réservoir de marnage 22 est équipé d'une pompe 24 pour relever les effluents vers le système d'aspersion 15, à travers des canalisations 30.

L'ensemble est installé à l'intérieur d'un dispositif 26 d'accumulation de chaleur et de protection des modules contre les intempéries, de préférence une serre 26. On peut envisager divers types de serre, connus de l'homme du métier. Celle-ci est équipée d'au moins une entrée d'air et d'au moins une sortie d'air et d'un dispositif de ventilation 25. La ventilation a pour effet d'extraire l'air humide de la serre et de favoriser son remplacement par de l'air provenant de l'extérieur et potentiellement plus sec.

Par ailleurs, l'installation comprend une dalle de récupération 27 sur laquelle sont posés les récipients 1. Lorsqu'un excès d'effluents liquides percole à travers le substrat végétal 28, il s'écoule à travers le fond 2 des récipients 1. Il est collecté au niveau de la dalle de récupération 27, laquelle sert également de surface d'évaporation. Avantageusement, des rigoles sont prévues sur la dalle afin d'amener l'excès d'effluents liquides 18 vers le réservoir de marnage 22. Ainsi, les effluents liquides 18 aspergés en excès sont remis en circulation dans l'installation après filtration.

Selon une autre variante, les lixiviats sont collectés dans un réservoir de collecte, non représenté, situé en contrebas de la dalle de récupération 27. Ce réservoir de collecte peut être équipé de moyens de mesure du débit de lixiviats, par exemple pour réguler finement l'aspersion. Les lixiviats collectés sont soit ramenés vers la cuve de marnage, 22, soit directement aspergés vers la surface d'aspersion des modules de traitement. Dans ce cas, de préférence, tant que des lixiviats sont utilisés pour l'aspersion, on n'utilise pas d'effluents provenant de la cuve de marnage 22. Pour éviter de devoir installer une pompe uniquement pour l'aspersion des lixiviats, il est possible de disposer la pompe de relevage 24 en contrebas, simultanément, de la cuve de marnage 22 et du réservoir de collecte. Dans ce cas, l'alimentation de la pompe de relevage 24 est assurée via une vanne trois-voies, qui peut être commutée entre la cuve de marnage 22 et le réservoir de collecte.

Le dispositif d'aspersion 15 comprend une buse d'aspersion adaptée pour asperger la surface qui correspond aux ouvertures 4 des récipients 1 accolés, en l'occurrence une surface carré. La buse est conçue pour minimiser les risques de colmatage. De telles buses sont disponibles commercialement.

Le procédé de traitement met en oeuvre le phénomène d'évaporation de la phase liquide des effluents et le phénomène de dégradation de la charge organique par la biomasse aérobie présente dans le substrat 28 d'origine végétale. Le substrat est organisé en massifs. Il comprend un mélange de compost et de matériaux ligneux qui confèrent une structure particulière au substrat 28.

Le procédé a initialement été mis en oeuvre pour traiter des effluents vinicoles et d'autres effluents organiques ne contenant pas de matières ou produits susceptibles de porter durablement atteinte à la biomasse aérobie et compatible avec une épandage ultérieur. Les effluents vinicoles sont préalablement débarrassés d'une partie des matières solides en suspension. Ils sont stockés dans un réservoir tampon avant d'être relevés pour être aspergés sur les massifs de substrat 28. Le substrat 28 se comporte comme un filtre qui retient la charge solide en suspension et la charge organique. Une biomasse se développe au sein du substrat. Sous l'effet de la chaleur dégagée par l'activité biologique et de la chaleur due à l'ensoleillement, piégée dans la serre 26, la phase liquide des effluents 18 aspergés dans les massifs, est évaporée. L'air humide qui en résulte est évacué à l'extérieur de la serre 26 par le flux d'air naturel et/ou grâce à un système mécanique de ventilation 25 ou d'extraction d'air.

Le substrat 28 est changé après deux ans de traitement. On obtient alors un substrat végétal enrichi. Dans la configuration illustrée aux figures 4 à 6, le procédé permet de traiter des effluents contenant de fortes charges organiques (jusqu'à une DCO de 100g/L).

Chaque récipient contient environ 1m³ de substrat d'origine végétale. Chaque module de traitement permet de traiter approximativement 15 à 20m³ d'effluents liquides par an, selon les conditions climatiques notamment et de l'association des modules à une dalle d'évaporation. Cela permet d'envisager l'utilisation de l'installation selon l'invention pour traiter jusqu'à 360 m³/an d'effluents, tout en respectant les contraintes en termes d'emprise au sol notamment.

### EXEMPLES

### 1. Conditions de traitement

Le procédé a été mis en oeuvre dans la région du Beaujolais (France), dans une exploitation vinicole, durant les vendanges et soutirages de l'année 2002. L'exploitation produit environ 950 hL de vin par an et rejette entre 35 et 55 m³ par an d'effluents. Cela représente un ratio de consommation d'eau de l'ordre de 50 L/par hectolitre de vin. Les effluents vinicoles issus de l'activité présentent une charge organique de l'ordre de 20 à 25 g/L de DCO avec un rapport DCO/DBO₅ d'environ 1,8. Ainsi, le flux annuel d'effluents vinicoles peut être estimé à :
- volume 50 m³/an dont 2/3 produits au cours des vendanges et des soutirages (soit 26 m³) ;
- charge organique : 1000 kg DCO et 555 kg DBO₅ ;
- pH : entre 3,5 et 5.

Les effluents sont aspergés sur 26 m³ de substrat végétal constitué d'un mélange de compost d'une granulométrie de 0 à 20 mm et de ligneux d'une granulométrie de 20mm à 60 mm dans une proportion volumique de 2/3 de compost pour 1/3 de ligneux.

La loi d'aspersion suivante a été adoptée :
- du 01 au 30.09 : 287 L/j
- du 01.10 au 31.10 : 105 L/j
- du 01.11 au 31.12: 61 L/j
- du 01.01 au 28.02 : pas d'aspersion ("hibernation")
- du 01.03 au 31.03 : 52 L/j
- du 01.04 au 30.04: 104 L/j

On considère en fait 4 périodes de fonctionnement : une première période d'aspersion, du début des vendanges (en général début septembre) jusqu'à la fin du mois de novembre, voire la mi-décembre. Puis les massifs sont mis à sécher et l'installation est mise hors gel, jusqu'à la fin du mois de février. Une seconde période d'aspersion débute en mars et se termine fin juillet. Puis, de préférence, les massifs sèchent à nouveau pendant le mois d'août. La maintenance et plus particulièrement le changement du substrat, peut intervenir pendant les périodes d'arrêt d'aspersion.

L'aspersion est généralement menée sur une durée de quelques secondes à quelques minutes (moins de 10 minutes de préférence). Le débit et la fréquence d'aspersion sont réglés en fonction des conditions climatiques, de l'humidité de l'air, de la température du substrat, de la température de l'air à l'intérieur de la serre et à l'extérieur de la serre.

Le volume maximal d'effluents liquides stockés constaté valait 11,8 m³, pendant la période de soutirage. Aucun effluent n'a été traité du 01.01 au 28.02 pendant la phase d'hibernation. Pendant cette période de deux mois, les effluents ne sont pas aspergés et traités mais simplement stockés dans le réservoir tampon et dans les massifs de substrat végétal.

Pour les analyses, les normes suivantes ont notamment été employées :

| | |
|---|---|
| Prétraitement des échantillons | NF ISO 11 464 X 31-412 (12/94) |
| Teneur en matière sèche (séchage à 105°C) | NF EN 14 346 Méthode A |
| Matière organique / sec (105°C) - Calcination 16h à 480 °C | NF U 44160 (11/85) |
| Eléments minéraux / sec (105°C) < 2mm | NF ISO 11 885 (03/93) |
| Extraction eau REGAL : B, Cd, Ca, Cr, Cu, Fe, Mg, Mn, Hg, Co, P, Pb, K, ZN NF EN 13346 X 33 - 010 (12/00) | |
| pH à 20°C | NFT 90-008 (02/01) |
| pH en suspension aqueuse 1/5 M/M prétraité | NF ISO 10390 X 31-117 (11/94) |
| Matière en suspension (MEST) | NF EN 872 (04/96) |
| Demande chimique en oxygène (DCO) | NFT 90-101 (02/01) |
| Demande biochimique en oxygène (DBO₅) | NFT EN 1889-1 (05/98) |
| Azote Kjeldahl / brut | NF EN 13342 X 33-009 (12/00) |
| Ammonium / brut | NF T 90-015-1 (01/00) |

### 2. Effluents bruts

Les effluents bruts ont été analysés. Leurs caractéristiques sont rapportées dans le tableau 1.

Les effluents bruts sont fortement chargés en matière organique, en particulier en période de réception du raisin et des pressurages. Ces valeurs doivent être de mise en rapport avec le faible ratio de consommation d'eau. Le rapport DCO/DBO₅ varie de 1,5 à 2,2 et traduit une bonne biodégradabilité de la charge organique contenue dans les effluents. Le pH est très acide, ce qui est normal pour ce type d'effluent.

**TABLEAU 1**

| | E1 | E2 | E3 | R03 | E4 |
|---|---|---|---|---|---|
| Date | 13/09/02 | 18/09/02 | 30/09/02 | 30/09/02 | 04/10/02 |
| Lieu* | Aval RT | Aval RT | RT | Aval RT | Aval RT |
| Nature** | EB | EB | EB | EB | EB |
| Activités cave | Réception vendanges | Vendanges + pressurages | Pressurages | Pressurages | Soutirages |

| ANALYSES | | | | | |
|---|---|---|---|---|---|
| pH | 4,6 | 3,65 | 4,05 | 4,05 | 4,00 |
| MEST (mg/L) | 923 | 1421,2 | 599,7 | 672,5 | 115,1 |
| DCOnd (mg/L) | 24100 | 69500 | 22600 | 22800 | 16400 |
| DB05nd (mg/L) | 14200 | 31300 | 15500 | 11100 | 10500 |
| DCO/DBO5 | 1,7 | 2,2 | 1,5 | 2,0 | 1,6 |
| NTK (mg/L) | 47,2 | - | - | - | - |
| P total (mg/L) | 8,81 | - | - | - | - |
| K total (mg/L) | 639,72 | - | - | - | - |

| | | | | | |
|---|---|---|---|---|---|
| * RT : réservoir tampon ** EB : effluent brut | | | | | |

### 3. Lixiviats

Les effluents aspergés en excès qui n'ont pas été absorbés ou évaporés, percolent à travers le substrat et rejoignent le réservoir de marnage. Ces lixiviats ont été analysés. Les résultats des analyses sont présentés au tableau 2.

Les lixiviats analysés présentent un pH particulièrement élevé, ce qui témoigne d'une modification de la nature des effluents à la suite de leur passage dans le substrat de traitement, probablement grâce à une activité bactérienne importante. La concentration en matière en suspension est très réduite par rapport à celle des effluents bruts avant traitement. Ainsi, le substrat joue un rôle de filtration en retenant les éléments les plus grossiers et en absorbant la matière organique. Les valeurs réduites de matière en suspension laissent penser à un faible lessivage du substrat par les lixiviats.

La DCO des lixiviats est en moyenne de 10g/L ce qui signifie que la DCO est réduite de près de 67 % par rapport à celle des effluents bruts. Cela confirme la dégradation de la charge organique des effluents dans le substrat, en plus du phénomène d'évaporation.

La DBO₅ résiduelle dans les lixiviats est quasiment nulle (43 mg/L en moyenne), ce qui montre, pour ce paramètre, que le rendement de dégradation de la matière organique est supérieur à 99,8 % par rapport aux effluents bruts.

Ainsi, le procédé permet une très bonne dégradation de la charge organique biodégradable (DBO₅) tandis que la partie non biodégradable (DCO) est relativement moins attaquée.

**TABLEAU 2**

| | LIX3 | LIX4 | LIX5 |
|---|---|---|---|
| Date | 30/09/02 | 04/10/02 | 30/09/02 |
| Lieu | Réservoir de marnage | Réservoir de marnage | Réservoir de marnage |
| Nature | Lixiviats | Lixiviats | Lixiviats |
| Activités cave | Pressurages | Soutirages | Fin d'activité |

| ANALYSE | | | |
|---|---|---|---|
| pH | 8,95 | 9,25 | - |
| MEST (mg/L) | 198,6 | 398,6 | - |
| DCOnd (mg/L) | 11500 | 13400 | 6113 |
| DB05nd(mg/L) | 69 | 35 | 24 |
| DCO/DBO₅ | 167 | 383 | 255 |

### 4. Compost

En fin d'expérimentation, le compost présente une compacité importante. Des prélèvements ont été réalisés pour analyse (sur environ 20 à 30 cm de profondeur). Les résultats d'analyse figurent dans le tableau 3 ci-dessous, dans lequel sont indiquées en outre des données bibliographiques.

Le compost obtenu à l'issu du cycle de traitement est beaucoup plus humide que le compost d'Amas ou le compost de référence. Il est également plus riche en matière organique. Son pH est proche de la neutralité, ce qui correspond à un compost de référence. Le rapport C/N entre dans la fourchette des composts de référence, ce qui témoigne d'une bonne minéralisation. En outre, le compost selon l'invention contient plus d'azote et de potassium que le compost de référence, ce qui indique un enrichissement.

Ainsi, le compost enrichi est conforme à la norme NF U 44 051, ce qui permet de le valoriser comme fertilisant agricole.

La présence de composés indésirables dans le compost a été recherchée et mesurée. Les valeurs des analyses sont indiquées dans le tableau 4 ci-dessous, ainsi que les valeurs seuils correspondant à diverses normes.

Ainsi, on constate que les valeurs d'analyse du substrat végétal enrichi sont inférieures au seuil réglementaire.

Naturellement, d'autres modes de réalisation, à la portée de l'homme de l'art, auraient pu être envisagés sans pour autant sortir du cadre de l'invention définie par les revendications ci-après.

**TABLEAU 3**

| | Compost enrichi selon l'invention | | Données bibliographiques ** | | | | | |
|---|---|---|---|---|---|---|---|---|
| | | | Moyenne compost Amas | | Norme NF U 44 051 | | Composition moyenne* | |
| | Sur brut | Sur sec | Sur brut | Sur sec | Sur brut | Sur sec | Sur brut | Sur sec |
| Matière sèche (%) | 37,8 | 100 | 68 | 100 | - | - | 55 | 100 |
| Matière organique (%) | - | 58,69 | 30 | 44 | 20 min | 30 min | 22,5 | 41 |
| Carbone organique (%) | - | 29,30 | - | - | - | - | - | - |
| MO/Norg | - | - | - | - | 55 | - | - | - |
| pH | 8,6 | - | - | - | - | - | 8 | - |
| Rapport C/N | 15,8 | - | 14,8 | - | - | - | 14 à 16 | - |

| ELEMENTS FERTILISANTS (en kg/t) | | | | | | | | |
|---|---|---|---|---|---|---|---|---|
| Phosphore P₂O₅ | - | 2,86 | 5 | 7,35 | - | - | 3,5 | 6,36 |
| Potassium K₂O | - | 17,14 | 10 | 14,71 | - | - | 6,5 | 11,82 |
| Azote Kjeldahl (NTK) | 7,03 | 18,60 | 10 | 14,71 | - | 30 kg/t max | 7,5 | 13,64 |
| Ammonium NH₄⁺ | 0,62 | 1,63 | - | - | - | - | - | - |
| Calcium Ca | - | 18,20 | 39 | 57,35 | - | - | 30 | 54,55 |
| Magnésium Mg | - | 2,46 | - | - | - | - | 3 | 5,45 |

| | | | | | | | | |
|---|---|---|---|---|---|---|---|---|
| * source : charte qualité des composts ADEME ** min : minimum ; max : maximum MO/Norg : matière organique / azote organique | | | | | | | | |

**TABLEAU 4**

| | | Valeurs seuils | | |
|---|---|---|---|---|
| | Compost enrichi (mg/kg MS) | Ecolabel européen (mg/kg MS) | Norme NF U 44 051 | Arrêté du 07/01/02 rubrique 2170 |
| COMPOSES TRACES ORGANIQUES | | | | |
| Fluoranthène | 0,09 | - | 4 | 4 |
| Benzo (B) fluoranthène | 0,04 | - | 2,5 | 2,5 |
| Benzon (A) pyrène | 0,02 | - | 1,5 | 1,5 |
| PCB 28 | < 0,01 | - | - | - |
| PCB 52 | < 0,01 | - | - | - |
| PCB 101 | < 0,01 | - | - | - |
| PCB 118 | < 0,01 | - | - | - |
| PCB 138 | < 0,01 | - | - | - |
| PCB 153 | < 0,01 | - | - | - |
| PCB 180 | < 0,01 | - | - | - |
| Somme des 7 PCB (min) | - | - | 0,8 | 0,8 |
| Somme des 7 PCB (max) | 0,07 | - | 0,8 | 0,8 |
| Somme des 7 PCB (moy) | 0,04 | - | 0,8 | 0,8 |

| ELEMENTS TRACES METALLIQUES | | | | |
|---|---|---|---|---|
| Bore (B) | 45 | - | - | - |
| Cadmium (Cd) | < 0,8 | 1 | 3 | 10 |
| Chrome (Cr) | 8 | 100 | 120 | 1000 |
| Fer (Fe) | 3,667 | - | - | - |
| Mercure (Hg) | < 0,4 | 1 | 2 | 10 |
| Nickel (Ni) | 5 | 50 | 60 | 200 |
| Plomb (Pb) | 25 | 100 | 180 | 800 |
| Manganèse (Mn) | 213 | - | - | - |
| Calcium (Ca) | 18,203 | - | - | - |
| Magnésium (Mg) | 2,457 | - | - | - |
| Cobalt (Co) | < 5 | - | - | - |
| Molybdène (Mo) | < 5 | - | - | - |
| Cuivre (Cu) | 32 | 75 | 300 | 1000 |
| Zinc (Zn) | 75 | 300 | 600 | 3000 |
| Cr+Cu+Ni+Zn | 120 | 525 | 1080 | 4000 |

## Revendications

1. Récipient (1 ; 1a ; 1b ; 1c) destiné à contenir un substrat d'origine végétale, en vue du traitement d'effluents liquides, ledit récipient comprenant :
- un fond (2) sensiblement plan,
- un cadre (3) définissant une ouverture (4) de chargement et de déchargement du récipient, le cadre (3) étant inscrit dans un plan sensiblement parallèle au fond (2),
- des parois latérales (5) s'étendant entre le fond (2) et le cadre (3), de sorte que le volume défini par le fond (2), les parois latérales (5) et le cadre (3), s'évase du fond (2) vers le cadre (3),
- au moins un évidement (7) sensiblement angulaire, délimité par des parois internes (8) au récipient, les parois internes (8) s'étendant selon la hauteur du récipient, sur au moins une partie de la hauteur du récipient, de sorte que la distance entre les parois internes (8) de l'évidement (7) diminue du fond (2) vers le sommet de l'évidement,
- le fond (2) et/ou les parois latérales (5) et/ou les parois internes (8) ayant une structure apte à assurer la contention du substrat d'origine végétale et apte à autoriser le contact entre l'air ambiant et le substrat d'origine végétale.

2. Récipient selon la revendication 1, dont le volume est inscrit dans un tronc de cône, de préférence un cône de révolution.

3. Récipient selon la revendication précédente, dont le volume est sélectionné parmi les troncs de polyèdre régulier, de préférence une pyramide à base carrée ou à base hexagonale régulière, et les troncs de cône de révolution.

4. Récipient selon l'une quelconque des revendications précédentes, dans lequel au moins un évidement (7) traverse le récipient de part en part, de sorte que l'air ambiant est susceptible de circuler à travers l'évidement.

5. Récipient l'une quelconque des revendications précédentes, dans lequel la pente des parois latérales (5) et la pente des parois internes (8), par rapport à un axe sensiblement perpendiculaire au fond (2), est comprise entre 2° et 35° inclus.

6. Récipient selon l'une quelconque des revendications précédentes, dont le fond (2), les parois latérales (5) et/ou les parois internes (8) ont une structure grillagée, comprenant de préférence un matériau rigide.

7. Installation de traitement d'effluents (18) liquides sur un substrat (28) d'origine végétale comprenant :
- au moins un réservoir-tampon (17) d'effluents (18) liquides, éventuellement équipé de moyens de dégrillage (20) et/ou de filtration (23),
- au moins un module (10) de traitement, comprenant au moins un récipient (1 ; 1a ; 1b ; 1c) selon l'une quelconque des revendications précédentes, de préférence au moins quatre récipients accolés entre eux, chaque récipient étant chargé en substrat (28) d'origine végétale biologiquement actif,
- au moins un dispositif d'aspersion (15) des effluents liquides par module de traitement, éventuellement équipé d'un dispositif anti-éclaboussures (11),
- des moyens de récupération des effluents (18) aspergés en excès,
- des moyens de mise en circulation (19, 21, 24, 29, 31) des effluents (18) liquides entre le réservoir-tampon (17), le(s) module(s) de traitement et les moyens de récupération (22, 27),
- au moins un dispositif (26) d'accumulation de chaleur et/ou de protection du(des) module(s) contre les intempéries, de préférence une serre,
• équipé d'au moins une entrée d'air et d'au moins une sortie d'air,
• éventuellement équipé d'un dispositif (25) de ventilation, de préférence une ventilation mécanique, pour établir une circulation d'air entre l'intérieur et l'extérieur du dispositif (26) d'accumulation de chaleur et/ou de protection contre les intempéries.

8. Installation selon la revendication précédente, équipée en outre :
- de moyens de mesure d'au moins un paramètre climatique,
- et/ou de moyens de mesure des niveaux d'effluents dans le réservoir-tampon et dans les moyens de récupération éventuels,
- et/ou des moyens de mesure des volumes d'effluents liquides mis en circulation,
- et/ou des moyens de contrôle et de commande du fonctionnement de l'installation, éventuellement asservis aux moyens de mesure.

9. Installation selon l'une quelconque des revendications 7 ou 8, comprenant des moyens de récupération des effluents aspergés en excès, sous la forme :
- d'une dalle de récupération (27) sur laquelle est(sont) installé(s) le(s) module(s),
- et/ou d'un réservoir de marnage (22), apte à recevoir les effluents (18) provenant du réservoir-tampon (17) et les effluents aspergés en excès, le réservoir de marnage (22) étant équipé de moyens (24, 30) de mise en circulation desdits effluents.

10. Installation selon l'une quelconque des revendications 7 à 9, dans laquelle le substrat (28) d'origine végétale est un compost de résidus "verts", comprenant éventuellement des éléments de structuration du substrat.

11. Installation selon l'une quelconque des revendications 7 à 10, dans laquelle les effluents (18) liquides sont des effluents aqueux éventuellement chargés de matière solide et/ou de matière organique, les effluents provenant de la transformation agricole et/ou agro-alimentaire.

12. Installation selon l'une quelconque des revendications 7 à 11, dans laquelle les moyens d'aspersion (15) comprennent une buse d'aspersion apte à asperger une surface carrée, hexagonale ou circulaire.

13. Installation selon l'une quelconque des revendications 7 à 12, dans laquelle les moyens d'aspersion (15) sont équipés d'un dispositif anti-éclaboussures (11) pour limiter l'entraînement par le flux d'air de gouttelettes d'effluent aspergé.

14. Procédé de traitement d'effluents (18) liquides sur un substrat (28) d'origine végétale, par évaporation et/ou par dégradation aérobie de la charge organique des effluents liquides, comprenant les étapes essentielles suivantes :
- on prévoit un récipient (1 ; 1a ; 1b, 1c) selon l'une quelconque des revendications 1 à 6,
- on charge le récipient avec du substrat (28) d'origine végétale biologiquement actif, de préférence un compost de résidus "verts", comprenant éventuellement des éléments de structuration du substrat,
- on stocke les effluents (18) liquides dans un réservoir-tampon (17), et éventuellement, on filtre les effluents liquides,
- on asperge le substrat (28) d'origine végétale avec les effluents (18) liquides pour maintenir l'humidité du substrat entre une limite inférieure et une limite supérieure prédéterminées, en fonction de paramètres pré-établis, notamment les conditions climatiques et/ou la période de l'année,
- on favorise :
• la circulation d'air au contact du substrat humidifié, au moins au niveau des parois latérales (5) et des parois internes (8) du récipient, afin d'évacuer l'air chargé d'humidité et de le remplacer par de l'air relativement plus sec,
• et/ou l'accumulation de chaleur dans le substrat (28), afin d'améliorer l'évaporation des effluents liquides (18),
• et/ou l'activité microbiologique aérobie au sein du substrat (28), afin de dégrader au moins partiellement la charge organique éventuellement présente dans les effluents (18) liquides.

15. Procédé de traitement selon la revendication précédente, dans lequel des périodes d'aspersions d'une durée variant de quelques secondes à quelques minutes, selon un débit par unité de surface aspergée de 0,5 L/min/m² à 20 L/min/m², alternent avec des périodes sans aspersions d'une durée de quelques minutes à quelques heures.

16. Procédé de traitement selon l'une quelconque des revendications 14 ou 15, dans lequel on récupère les effluents (18) aspergés en excès qui percolent à travers le substrat, et on en remet au moins une partie en circulation.

17. Procédé selon l'une quelconque des revendications 14 à 16, dans lequel les effluents (18) liquides sont des effluents aqueux éventuellement chargés de matière solide et/ou de matière organique, les effluents provenant de la transformation agricole et/ou agro-alimentaire.

18. Substrat végétal enrichi, susceptible d'être obtenu à l'issue d'un procédé de traitement selon l'une quelconque des revendications 14 à 17.

19. Amendement pour l'agriculture ou l'horticulture, comprenant un substrat végétal enrichi selon la revendication précédente.
